# NEW EUROPEAN PATENT SPECIFICATION

(11) **EP 0 807 906 B2**
(45) Date of publication and mention of the opposition decision: **21.11.2012**
(45) Mention of the grant of the patent: 21.05.2003
(21) Application number: 97113397.0
(22) Date of filing: 08.03.1995
(51) Int. Cl.: G06K 9/00, G07D 7/00

(54) **Method and apparatus for discriminating and counting documents**
Verfahren und Apparat zum Unterscheiden und Zählen von Dokumenten
Procédé et appareil pour identifier et compter des documents

(30) Priority: 08.03.1994 US 207592; 29.03.1994 US 219093; 12.04.1994 US 226660; 16.05.1994 US 243807; 09.08.1994 US 287882; 04.10.1994 US 317349; 14.11.1994 US 340031; 22.12.1994 US 362848; 27.02.1995 US 394752; 07.03.1995 US 399854
(43) Date of publication of application: 19.11.1997
(62) Divisional of application: 95913629.2
(73) Proprietor: Cummins-Allison Corp., Mount Prospect, Illinois 60056 (US)
(72) Inventor: Graves, Bradford T., Arlington Heights, IL 60004 (US); Mazur, Richard A., Naperville, IL 60540 (US); Mennie, Douglas U., Barrington, IL 60010 (US); Jones, William J., Kenilworth, IL 60043 (US); Raterman, Donald E., Deerfield, IL 60015 (US); Stromme, Lars R., Arlington Heights, IL 60004 (US); Bauch, Aaron M., East Setauket, NY 11733 (US); Csulits, Frank M., Gurnee, IL 60031 (US); Jones, John E., Winnetka, IL 60043 (US); Shreiter, Heinz W., Skokie, IL 60076 (US); Munro, Mark C., Park Ridge, IL 60068 (US)
(74) Representative: Grünecker, Kinkeldey, Stockmair & Schwanhäusser

(56) References cited:
- WO-A1-90/07165
- WO-A1-92/17394
- US-A- 4 250 806
- US-A- 4 653 647
- US-A- 5 295 196

## Description

The invention refers to a currency counting and discrimination device and method. US-A-5,295,196 discloses a method and apparatus for discriminating between currency bills of different denominations using an optical sensing and correlation technique based on the sensing of bill reflectance characteristics obtained by illuminating and scanning a bill. A series of detected reflectance signals are obtained by sampling and digitally processing the reflected light at a plurality of predefined sample points as a currency bill is moved across an illuminated strip. The sample data is subjected to digital processing whereby the reflectance data represents a characteristic pattern that is unique for a given bill denomination and incorporates sufficient distinguishing features between characteristic patterns for discriminating between currency denominations.

WO 92/17394 discloses a feed arrangement for use with currency handling apparatus but does not disclose any features how the bills are checked for genuineness and what is happening when a bill cannot be discriminated.

US-A-4,250,806 discloses a document processor for transporting documents through a path, detecting flaws thereon by electronically scanning each side of the document, printing selectable indicia only on unflawed documents, and sorting and storing separately the flawed and unflawed documents. The electronically scanned information is compared with a master document stored in a computer memory. As a result of this comparison, outputs are provide form the computer which are indicative of a favorable or unfavorable comparison for controlling the printing and sorting functions.

From US-A-4,653,647, a sorting and stacking and stacking apparatus for currency notes is known having a note inspection section for inspecting the denomination of a currency note, a normal note, a damaged note, an obverse-presented note and a reverse-presented note. The currency notes of a predetermined denomination among the currency notes are fed to a first stacking section having first and second pockets while currency notes of other denominations are fed to a second stacking section. Unidentifiable notes are sent to the second stacking section as well. The operation of the device is automatic, there is no means enabling an operator to interfere if a bill is not identified.

From WO 90/07165, a counterfeit detection apparatus for banknotes and other valuable documents is known comprising means for detecting a metallised thread imbedded in the banknotes or documents. The apparatus further includes means for detecting the amount of UV absorption and electro-mechanical means for autoreferencing the UV lamp's intensity illuminating the documents. Displays are provided to give a visual or audible verification of the authenticity of the documents.

A variety of techniques and apparatus have been used to satisfy the requirements of automatic currency handling systems. At the lower end of the sophistication in this area of technology are systems capable of handling only a specific type of currency, such as a specific dollar denomination, while rejecting all other currency types. At the upper end are complex systems which are capable of identifying and discriminating among and automatically counting multiple currency denominations.

GB-A-2 061 232 discloses a banknote tester with unit count for one denomination.

EP-A-0 613 107 discloses a device for handling a stack of bills with different denominations.

In some currency discriminators bills are transported, one at a time, passed a discriminating unit. As the bills pass the discriminating unit, the denomination of each bill is determined and a running total of each particular currency denomination and/or of the total value of the bills that are processed is maintained. A number of discriminating techniques may be employed by the discriminating unit including optical or magnetic scanning of bills. A plurality of output bins are provided and the discriminator includes means for sorting bills into the plurality of bins. For example, a discriminator may be designed to recognize a number of different denominations of U.S. bills and comprise an equal number of output bins, one associated with each denomination. These discriminators also include a reject bin for receiving all bills which cannot be identified by the discriminating unit. These bills may later be examined by an operator and then either re-fed through the discriminator or set aside as unacceptable.

Depending on the design of a discriminator, bills may be transported and scanned either along their long dimension or their narrow dimension. For a discriminator that transport bills in their narrow dimension, it is possible that a given bill may be oriented either face up or face down and either top edge first ("forward" direction) or top edge last ("reverse" direction). For discriminators that transport bills in their long dimension, it is possible that a given bill may be oriented either face up or face down and either left edge first ("forward" direction) or left edge last ("reverse" direction). The manner in which a bill must be oriented as it passes a discriminating unit depends on the characteristics of the discriminator. Some discriminators are capable of identifying the denomination of a bill only if it is fed with a precise orientation, e.g., face up and top edge first. Other discriminators are capable of identifying bills provided they are "faced" (i.e., fed with a predetermined face orientation, that is all face up or all face down). For example, such a discriminator may be able to identify a bill fed face up regardless of whether the top edge is fed first or last. Other discriminators are capable of identifying the denomination fed with any orientation. However, whether a given discriminator can discriminate between bills fed with different orientations depends on the discriminating method used. For example, a discriminator that discriminates bills based on patterns of transmitted light may be able to identify the denomination of a forward fed bill regardless of whether the bill is fed face up or face down, but the same discriminator would not be able to discriminate between a bill fed face up and a bill fed face down.

Currently, discriminators are known which discriminate and/or sort by denomination when bills are properly faced. In such systems, all reverse-faced bills are not identified and are routed to a reject receptacle. Also discriminators are known which discriminate and/or sort between all bills facing up and all bills facing down. For example, in a multi-output pocket system, all face up bills, regardless of denomination, may be routed to a first pocket and all face down bills, regardless of denomination, may be routed to a second pocket. Furthermore, there is currently known discriminators designed to accept a stack of faced bills and flag the detection of a reverse-faced bill, thus allowing the reverse-faced bill to be removed from the stack. However, there remains a need for a discriminator that can detect and flag the presence of a bill oriented with an incorrect forward/reverse orientation and a discriminator that can sort between forward-oriented bills and reverse-oriented bills.

Furthermore, for a number of reasons, a discriminating unit may be unable to determine the denomination of a bill. These reasons include a bill being excessively soiled, worn, or faded, a bill being torn or folded, a bill being oriented in a manner that the discriminating unit cannot handle, and the discriminating unit having poor discriminating performance. Furthermore, the discriminating unit and/or a separate authenticating unit may determine that a bill is not genuine. In current discriminators, such unidentified or non-genuine bills are deposited in a reject receptacle.

A characteristic of the above described discriminators is that the value of any rejected unidentified bills is not added to the running total of the aggregate value of the stack of bills nor do the counters keeping track of the number of each currency denomination reflect the rejected unidentified bills. While this is desirable with respect to bills which are positively identified as being fake, it may be undesirable with respect to bills which were not identified for other reasons even though they are genuine bills. While the bills in a reject receptacle may be re-fed through the discriminator, the operator must then add the totals from the first batch and the second batch together. Such a procedure can be inefficient in some situations. Also, if a bill was rejected the first time because it was, for example, excessively soiled or too worn, then it is likely that the bill will remain unidentified by the discriminating unit even if re-fed.

A problem with the above described situations where the totals and/or counts do not reflect all the genuine bills in a stack is that an operator must then count all the unidentified genuine bills by hand and add such bills to separately generated totals. As a result the chance for human error increases and operating efficiency decreases. Take for example a bank setting where a customer hands a teller a stack of currency to be deposited. The teller places the stack of bills in a discriminator, the display on the discriminator indicates that a total of 5730 has been identified. However, fourteen genuine bills remain unidentified. As a result, the teller must count these fourteen bills by hand or re-fed through the discriminator and then add their total to the $730 total. An error could result from the teller miscounting the unidentified bills, the teller forgetting to add the two totals together, or the teller overlooking the unidentified bills entirely and only recording a deposit of $730. Moreover, even if the teller makes no mistakes, the efficiency of the teller is reduced by having to manually calculate additional totals. The decrease in efficiency is further aggravated where detailed records must be maintained about the specific number of each denomination processed during each transaction.

Therefore, there is a need for a currency discriminator which is capable of conveniently and efficiently accommodating genuine bills that, for whatever reason, remain unidentified after passing through the discriminating unit of a discriminator.

### SUMMARY OF THE INVENTION

It is the object of the present invention to provide an improved currency counting and discrimination device and method for identifying currency bills comprising a plurality of currency denominations.

This object is attained by the features of claims 1 and 5, respectively. Preferred embodiments of the invention are subject-matter of the respective dependent claims.

### Brief Description Of The Drawings

FIG. 1 is a functional block diagram illustrating a preferred embodiment of a document authenticator and discriminator according to the present invention;
FIG. 2 is a functional block diagram illustrating another preferred embodiment of a document authenticator and discriminator according to the present invention;
FIG. 3 is a functional block diagram illustrating another preferred embodiment of a document authenticator and discriminator according to the present invention;
FIG. 4 is a view of a control and display panel in the machine of FIG. 1;

### Detailed Description Of The Preferred Embodiments

While the invention is susceptible to various modifications and alternative forms, specific embodiments thereof have been shown by way of example in the drawings and will herein be described in detail. It should be understood, however, that it is not intended to limit the invention to the particular forms disclosed, but on the contrary, the intention is to cover all modifications, equivalents, and alternatives falling within the scope of the invention as defined by the appended claims.

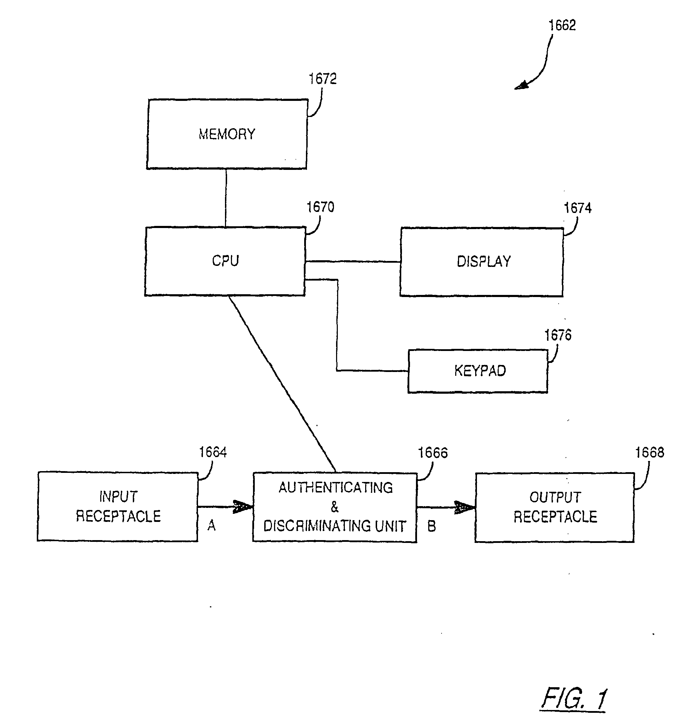

A currency discrimination system adapted to U.S. currency is described in connection with, for example, FIGs. 1-4. Subsequently, modifications to such a discrimination system will be described in obtaining a currency discrimination system in accordance with other preferred embodiments of the present invention, such a currency discriminator systems having multiple scanheads per side. Furthermore, while the preferred embodiments below entail the scanning of currency bills, the system of the present invention is applicable to other documents as well. For example, the system of the present invention may be employed in conjunction with stock certificates, bonds, and postage and food stamps.

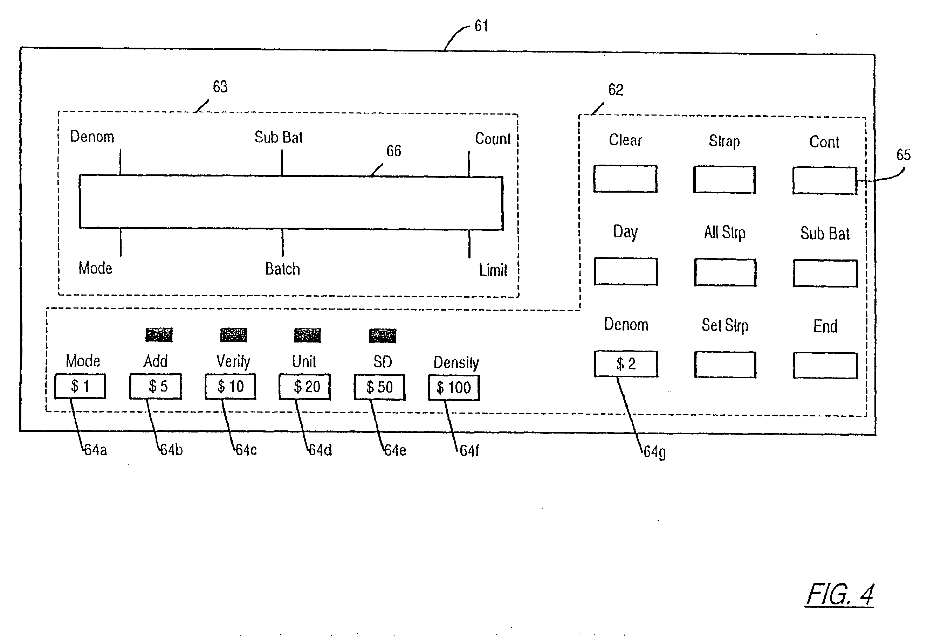

In order to avoid problems associated with re-feeding bills, counting bills by hand, and adding together separate totals, according to a preferred embodiment of the present invention a number of selection elements associated with individual denominations are provided. In FIG. 1, these selection elements are in the form of keys or buttons of a keypad. Other types of selection elements such as switches or displayed keys in a touch-screen environment may be employed. The operation of the selection elements and several of the operating modes of the discriminator 10 are described below in conjunction with FIGs. 1 and 4.

FIG. 1 is a functional block diagram illustrating a currency discriminator system 1662 for explanation purposes. The discriminator system 1662 comprises an input receptacle 1664 for receiving a stack of currency bills. A transport mechanism (as represented by arrows A and B) transports the bills in the input receptacle passed an authenticating and discriminating unit 1666 to an output receptacle 1668 where the bills are re-stacked such that each bill is stacked on top of or behind the previous bill so that the most recent bill is the top-most or rear-most bill. The authenticating and discriminating unit scans and determines the denomination of each passing bill. Any variety of discriminating techniques may be used. Depending on the characteristics of the discriminating unit employed, the discriminator may be able to recognize bills only if fed face up or face down, regardless of whether fed face up or face down, only if fed in a forward orientation or reverse orientation, regardless of whether fed in a forward or reverse orientation, or some combination thereof. Additionally, the discriminating unit may be able to scan only one side or both sides of a bill. In addition to determining the denomination of each scanned bill, the authenticating and discriminating unit 1666 may additionally include various authenticating tests such as an ultraviolet authentication test.

Signals from the authenticating and discriminating unit 1666 are sent to a signal processor such as a central processor unit ("CPU") 1670. The CPU 1670 records of results of the authenticating and discriminating tests in a memory 1672. When the authenticating and discriminating unit 1666 is able to confirm the genuineness and denomination of a bill, the value of the bill is added to a total value counter in memory 1672 that keeps track of the total value of the stack of bills that were inserted in the input receptacle 1664 and scanned by the authenticating and discriminating unit 1666. Additionally, depending on the mode of operation of the discriminator system 1662, counters associated with one or more denominations are maintained in the memory 1672. For example, a S1 counter may be maintained to record how many $1 bills were scanned by the authenticating and discriminating unit 1666. Likewise, a $5 counter may be maintained to record how many $5 bills were scanned, and so on. In an operating mode where individual denomination counters are maintained, the total value of the scanned bills may be determined without maintaining a separate total value counter. The total value of the scanned bills and/or the number of each individual denomination may be displayed on a display 1674 such as a monitor or LCD display.

As discussed above, a discriminating unit such as the authenticating and discriminating unit 1666 may not be able to identify the denomination of one or more bills in the stack of bills loaded into the input receptacle 1664. For example, if a bill is excessively worn or soiled or if the bill is torn a discriminating unit may not be able to identify the bill. Furthermore, some known discrimination methods do not have a high discrimination efficiency and thus are unable to identify bills which vary even somewhat from an "ideal" bill condition or which are even somewhat displaced by the transport mechanism relative to the scanning mechanism used to discriminate bills. Accordingly, such poorer performing discriminating units may yield a relatively large number of bills which are not identified. Alternatively, some discriminating units may be capable of identifying bills only when they are fed in a predetermined manner. For example, some discriminators may require a bill to be faced in a predetermined manner. Accordingly, when a bill is fed face down passed a discriminating unit which can only identify bills fed face up, the discriminating unit can not identify the bill. Likewise, other discriminators require a specific edge of a bill to be fed first, for example, the top edge of a bill. Accordingly, bills which are not fed in the forward direction, that is, those that are fed in the reverse direction, are not identified by such a discriminating unit.

The discriminator system 1662 is designed so that when the authenticating and discriminating unit is unable to identify a bill, the transport mechanism is stopped so that the unidentified bill is the last bill transported to the output receptacle. After the transport mechanism stops, the unidentified bill is then, for example, positioned at the top of or at the rear of the stack of bills in the output receptacle 1668. The output receptacle 1668 is preferably positioned within the discriminator system 1662 so that the operator may conveniently see the flagged bill and/or remove it for closer inspection. Accordingly, the operator is able to easily see the bill which has not been identified by the authenticating and discriminating unit 1666. The operator may then either visually inspect the flagged bill while it is resting on the top of or at the rear of the stack, or alternatively, the operator may chose to remove the bill from the output receptacle in order to examine the flagged bill more closely. The discriminator system 1662 may be designed to continue operation automatically when a flagged bill is removed from the output receptacle or may be designed to require a selection element to be depressed. Upon examination of a flagged bill by the operator, it may be found that the flagged bill is genuine even though is was not identified by the discriminating unit. However, because the bill was not identified, the total value and/or denomination counters in the memory 1672 will not reflect its value. According to one embodiment, such an unidentified bill is removed from the output stack and either re-fed through the discriminator or set aside. In the latter case, any genuine set aside bills are counted by hand.

In prior discriminators, unidentified discriminators were routed to a separate reject receptacle. In such systems, an unidentified genuine bill would have to be removed from a reject receptacle and re-fed through the discriminator or the stack of rejected bills would have to be counted by hand and the results separately recorded, Furthermore, because re-fed bills have gone unidentified once, they are more likely to go unidentified again and ultimately may have to be counted by hand. However, as discussed above, such procedures may increase the chance for human error or at least lower the efficiency of the discriminator and the operator.

In order to avoid problems associated with re-feeding bills, counting bills by hand, and adding together separate totals, according to a preferred embodiment of the present invention a number of selection elements associated with individual denominations are provided. In FIG. 1 and 4, these selection elements are in the form of keys or buttons of a keypad 1676 or 62. Other types of selection elements such as switches or displayed keys in a touch-screen environment may be employed. The operation of the selection elements will be described in more detail in connection with FIG. 4 but briefly when an operator determines that a flagged bill is acceptable, the operator may simply depress the selection element associated with the denomination of the flagged bill and the corresponding denomination counter and/or the total value counter are appropriately incremented and the discriminator system 1662 resumes operating again. As discussed above, a bill may be flagged for any number of reasons including the bill being a no call or suspect bill. In non-automatic restart discriminators, where an operator has removed a genuine flagged bill from the output receptacle for closer examination, the bill is first replaced into the output receptacle before a corresponding selection element is chosen. When an operator determines that a flagged bill is not acceptable, the operator may remove the unacceptable flagged bill from the output receptacle without replacement and depress a continuation key on the keypad 1676 or 62. When the continuation key is selected the denomination counters and the total value counter are not affected and the discriminator system 1662 will resume operating again. In automatic restart discriminators, the removal of a bill from the output receptacle is treated as an indication that the bill is unacceptable and the discriminator automatically resumes operation without affecting the denomination counters and/or total value counters. An advantage of the above described procedure is that appropriate counters are incremented and the discriminator is restarted with the touch of a single key, greatly simplifying the operation of the discriminator system 1662 while reducing the opportunities for human error.

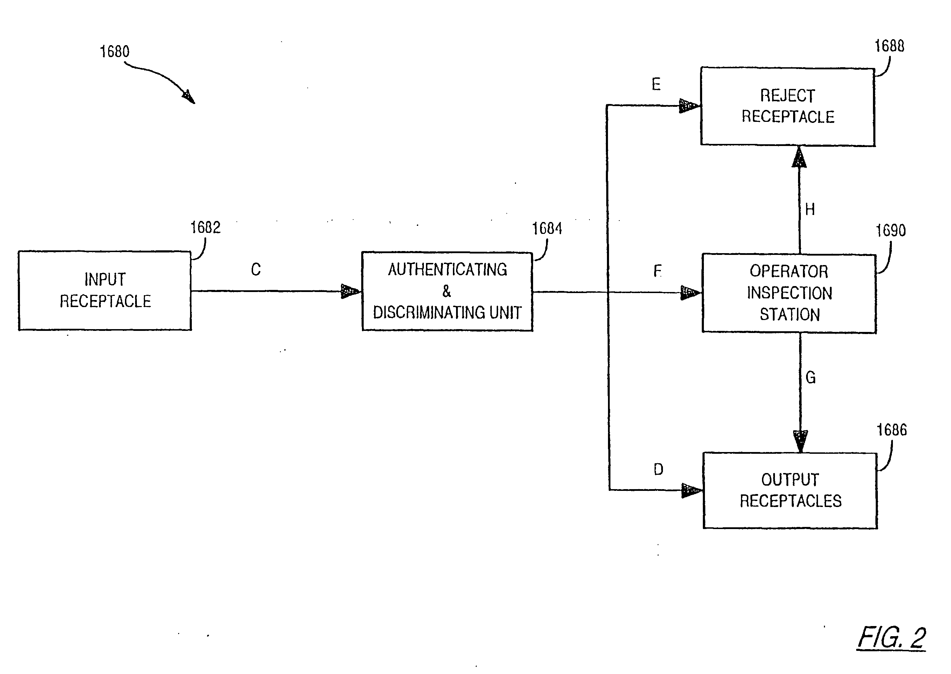

Turning now to FIG. 2, there is shown a functional block diagram illustrating a preferred embodiment of a document authenticator and discriminator according to the present invention. The discriminator system 1680 comprises an input receptacle 1682 for receiving a stack of currency bills. A transport mechanism (as represented by arrow C) transports the bills in the input receptacle, one at a time, passed an authenticating and discriminating unit 1684. Based on the results of the authenticating and discriminating unit 1684, a bill is either transported to one of a plurality of output receptacles 1686 (arrow D), to a reject receptacle 1688 (arrow E), or to an operator inspection station 1690 (arrow F). When is bill is determined to be genuine and its denomination has been identified, the bill is transported to an output receptacle associated with its denomination. For example, the discriminator system 1680 may comprise seven output receptacles 1686, one associated with each of seven U.S. denominations, i.e., $1, $2, $5, $10, $20, $50, and $100. The transport mechanism directs (arrow D) the identified bill to the corresponding output receptacle. Alternatively, where the authenticating and discriminating unit determines that a bill is a fake, the bill is immediately routed (arrow E) to the reject receptacle 1688. Finally, if a bill is not determined to be fake but for some reason the authenticating and discriminating unit 1684 is not able to identify the denomination of the bill, the flagged bill is routed (arrow F) to an inspection station and the discriminator system 1680 stops operating. The inspection station is preferably positioned within the discriminator system 1680 so that the operator may conveniently see the flagged bill and/or remove it for closer inspection. If the operator determines that the bill is acceptable, the operator returns the bill to the inspection station if it was removed and selects a selection element (not shown) corresponding to the denomination of the flagged bill. Appropriate counters (not shown) are incremented, the discriminator system 1680 resumes operation, and the flagged bill is routed (arrow G) to the output receptacle associated with the chosen selection element. On the other hand, if the operator determines that the flagged bill is unacceptable, the operator returns the bill to the inspection station if it was removed and selects a continuation element (not shown). The discriminator system 1680 resumes operation, and the flagged bill is routed (arrow H) to the reject receptacle 1688 without incrementing the counters associated with the various denomination and/or the total value counters. Alternatively, the discriminator system 1680 may permit the operator to place any unacceptable unidentified bills aside or into the reject receptacle by hand. While transport paths D and G and paths E and H are illustrated as separate paths, paths D and G and paths E and H, respectively, may be the same path so that all bills proceeding to either one of the output receptacles 1686 or the reject receptacle 1688, respectively, are routed through the inspection station 1690.

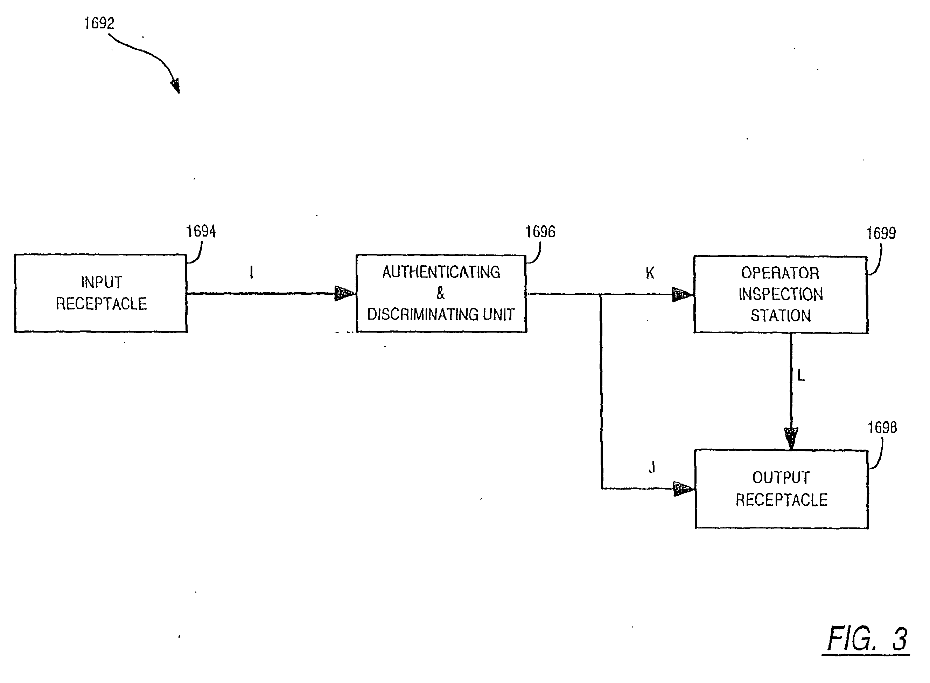

Turning now to FIG. 3, there is shown a functional block diagram illustrating another preferred embodiment of a document authenticator and discriminator according to the present invention. The discriminator system 1692 comprises an input receptacle 1694 for receiving a stack of currency bills. A transport mechanism (as represented by arrow I) transports the bills in the input receptacle, one at a time, passed an authenticating and discriminating unit 1696. Based on the results of the authenticating and discriminating unit 1684, a bill is either transported to a single output receptacle 1698 (arrow J) or to an operator inspection station 1699 (arrow K). When is bill is determined to be genuine and its denomination has been identified, the bill is transported to the single output receptacle. Alternatively, where the authenticating and discriminating unit determines that a bill is a fake or for some reason the authenticating and discriminating unit 1684 is not able to identify the denomination of the bill, the flagged bill is routed (arrow K) to an inspection station and the discriminator system 1692 stops operating. The inspection station is preferably positioned within the discriminator system 1692 so that the operator may conveniently see the flagged bill and/or remove it for closer inspection. Where a bill has been positively determined to be a fake by the authenticating and discriminating unit 1696, an appropriate indication, for example, via a message in a display or the illumination of a light, can be given to the operator as to the lack of genuineness of the bill. The operator may then remove the bill without replacement from the inspection station 1699 and select a continuation element. Where a bill has not been positively identified as a fake nor has had its denomination identified and where the operator determines that the bill is acceptable, the operator returns the bill to the inspection station if it was removed and selects a selection element (not shown) corresponding to the denomination of the flagged bill. Appropriate counters (not shown) are incremented, the discriminator system 1680 resumes operation, and the flagged bill is routed (arrow L) to the single output receptacle 1698. On the other hand, if the operator determines that the flagged bill is unacceptable, the operator removes the bill without replacement form the inspection station and selects a continuation element (not shown). The discriminator system 1692 resumes operation without incrementing the counters associated with the various denomination and/or the total value counters. While transport paths J and L are illustrated as separate paths, they may be the same path so that all bills proceeding to the single output receptacle 1698 are routed through the inspection station 1699.

The operation of the selection elements will now be described in more detail in conjunction with FIG. 4 which is a front view of a control panel 61 of a preferred embodiment of the present invention. The control panel 61 comprises a keypad 62 and a display section 63. The keypad 62 comprises a plurality of keys including seven denomination selection elements 64a-64g, each associated with one of seven U.S. currency denominations, i.e., $1, $2, $5, $10, $20, $50, and $100. The $1 denomination selection key 64a also serves as a mode selection key. The keypad 62 also comprises a "Continuation" selection element 65. Various information such as instructions, mode selection information, authentication and discrimination information, individual denomination counter values, and total batch counter value are communicated to the operator via an LCD 66 in the display section 63. A discriminator according to a preferred embodiment of the present invention has a number of operating modes including a mixed mode, a stranger mode, a sort mode, a face mode, and a forward/reverse orientation mode. The operation of a discriminator having the denomination selection elements 64a-64g and the continuation element 65 will now be discussed in connection with several operating modes.

### (A) Mixed Mode

Mixed mode is designed to accept a stack of bills of mixed denomination, total the aggregate value of all the bills in the stack and display the aggregate value in the display 63. Information regarding the number of bills of each individual denomination in a stack may also be stored in denomination counters. When an otherwise acceptable bill remains unidentified after passing through the authenticating and discriminating unit, operation of the discriminator may be resumed and the corresponding denomination counter and/or the aggregate value counter may be appropriately incremented by selecting the denomination selection key 64a-64g associated with the denomination of the unidentified bill. For example, if the discriminator system 1662 of FIG. 1 stops operation with an otherwise acceptable $5 bill being the last bill deposited in the output receptacle, the operator may simply select key 64b. When key 64b is depressed, the operation of the discriminator is resumed and the $5 denomination counter is incremented and/or the aggregate value counter is incremented by $5. Furthermore, in the discriminator systems 1680 of FIG. 2 and 1692 of FIG. 3, the flagged bill may be routed from the inspection station to an appropriate output receptacle. Otherwise, if the operator determines the flagged bill is unacceptable, the bill may be removed from the output receptacle of FIGs. 1 or the inspection station 1680 of FIG. 2, the flagged bill may be routed to the reject receptacle 1688. The continuation key 65 is depressed after the unacceptable bill is removed, and the discriminator resumes operation without affecting the total value counter and/or the individual denomination counters.

### (B) Stranger Mode

Stranger mode is designed to accommodate a stack of bills all having the same denomination, such as a stack of $10 bills. In such a mode, when a stack of bills is processed by the discriminator the denomination of the first bill in the stack is determined and subsequent bills are flagged if they are not of the same denomination. Alternatively, the discriminator may be designed to permit the operator to designate the denomination against which bills will be evaluated with those of a different denomination being flagged. Assuming the first bill in a stack determines the relevant denomination and assuming the first bill is a $10 bill, then provided all the bills in the stack are $10 bills, the display 63 will indicate the aggregate value of the bills in the stack and/or the number of $10 bills in the stack. However, if a bill having a denomination other than $10 is included in the stack, the discriminator will stop operating with the non-$10 bill or "stranger bill" being the last bill deposited in the output receptacle in the case of the discriminator system 1662 of FIG. 1. The stranger bill may then be removed from the output receptacle and the discriminator is started again either automatically or by depression of the "Continuation" key 65 depending on the set up of the discriminator system. An unidentified but otherwise acceptable $10 bill may be handled in a manner similar to that described above in connection with the mixed mode, e.g., by depressing the $10 denomination selection element 64c, or alternatively, the unidentified but otherwise acceptable $10 bill may be removed from the output receptacle and placed into the input hopper to be re-scanned. Upon the completion of processing the entire stack, the display 63 will indicate the aggregate value of the $10 bills in the stack and/or the number of $10 bills in the stack. All bills having a denomination other than $10 will have been set aside and will not be included in the totals. Alternatively, these stranger bills can be included in the totals via operator selection choices. For example, if a $5 stranger bill is detected and flagged in a stack of $10 bills, the operator may be prompted via the display as to whether the $5 bill should be incorporated into the running totals. If the operator responds positively, the $5 bill is incorporated into appropriate running totals, otherwise it is not. Alternatively, a set-up selection may be chosen whereby all stranger bills are automatically incorporated into appropriate running totals.

### (C) Sort Mode

Sort mode is designed to accommodate a stack of bills wherein the bills are separated by denomination. For example, all the $1 bills may be placed at the beginning of the stack, followed by all the $5 bills, followed by all the $10 bills, etc. The operation of the sort mode is similar to that of the stranger mode except that after stopping upon the detection of a different denomination bill, the discriminator is designed to resume operation upon removal of all bills from the output receptacle. Returning to the above example, assuming the first bill in a stack determines the relevant denomination and assuming the first bill is a $1 bill, then the discriminator processes the bills in the stack until the first non-$1 bill is detected, which in this example is the first $5 bill. At that point, the discriminator will stop operating with the first $5 being the last bill deposited in the output receptacle. The display 63 may be designed to indicate the aggregate value of the preceding $1 bills processed and/or the number of preceding $1 bills. The scanned $1 bills and the first $5 bill are removed from the output receptacle and placed in separate $1 and $5 bill stacks. The discriminator will start again automatically and subsequent bills will be assessed relative to being $5 bills. The discriminator continues processing bills until the first $10 bill is encountered. The above procedure is repeated and the discriminator resumes operation until encountering the first bill which is not a $10 bill, and so on. Upon the completion of processing the entire stack, the display 63 will indicate the aggregate value of all the bills in the stack and/or the number of bills of each denomination in the stack. This mode permits the operator to separate a stack of bills having multiple denominations into separate stacks according to denomination.

### (D) Face Mode

Face mode is designed to accommodate a stack of bills all faced in the same direction, e.g., all placed in the input hopper face up (that is the portrait or black side up for U.S. bills) and to detect any bills facing the opposite direction. In such a mode, when a stack of bills is processed by the discriminator, the face orientation of the first bill in the stack is determined and subsequent bills are flagged if they do not have the same face orientation. Alternatively, the discriminator may be designed to permit designation of the face orientation to which bills will be evaluated with those having a different face orientation being flagged. Assuming the first bill in a stack determines the relevant face orientation and assuming the first bill is face up, then provided all the bills in the stack are face up, the display 63 will indicate the aggregate value of the bills in the stack and/or the number of bills of each denomination in the stack. However, if a bill faced in the opposite direction (i.e., face down in this example) is included in the stack, the discriminator will stop operating with the reverse-faced bill being the last bill deposited in the output receptacle. The reverse-faced bill then may be removed from the output receptacle. In automatic re-start embodiments, the removal of the reverse-faced bill causes the discriminator to continue operating. The removed bill may then be placed into the input receptacle with the proper face orientation. Alternatively, in non-automatic re-start embodiments, the reverse-faced bill may be either placed into the input receptacle with the proper face orientation and the continuation key 65 depressed, or placed back into the output receptacle with the proper face orientation. Depending on the set up of the discriminator when a bill is placed back into the output receptacle with the proper face orientation, the denomination selection key associated with the reverse-faced bill may be selected, whereby the associated denomination counter and/or aggregate value counter are appropriately incremented and the discriminator resumes operation. Alternatively, in embodiments wherein the discriminator is capable of determining denomination regardless of face orientation, the continuation key 65 or a third key may be depressed whereby the discriminator resumes operation and the appropriate denomination counter and/or total value counter is incremented in accordance with the denomination identified by the discriminating unit. In discriminators that require a specific face orientation, any reverse-faced bills will be unidentified bills. In discriminators that can accept a bill regardless of face orientation, reverse-faced bills may be properly identified. The later type of discriminator may have a discriminating unit with a scanhead on each side of the transport path. The ability to detect and correct for reverse-faced bills is important as the Federal Reserve requires currency it receives to be faced in the same direction.

In a multi-output receptacle discriminator, the face mode may be used to route all bills facing upward to one output receptacle and all bills facing downward to another output receptacle. In single-sided discriminators, reverse-faced bills may be routed to an inspection station such as 1690 of FIG. 2 for manual turnover by the operator and the unidentified reverse-faced bills may then be passed by the discriminator again. In dual-sided discriminators, identified reverse-faced bills may be routed directly to an appropriate output receptacle. For example, in dual-sided discriminators bills may be sorted both by face orientation and by denomination, e.g., face up $1 bills into pocket #1, face down $1 bills into pocket #2, face up $5 bills into pocket #3, and so on or simply by denomination, regardless of face orientation, e.g., all $1 bills into pocket #1 regardless of face orientation, all $2 bills into pocket #2, etc.

### (E) Forward/Reverse Orientation Mode

Forward/Reverse Orientation mode ("Orientation" mode) is designed to accormmodate a stack of bills all oriented in a predetermined forward or reverse orientation direction. For example in a discriminator that feeds bills along their narrow dimension, the forward direction may be defined as the fed direction whereby the top edge of a bill- is fed first and conversely for the reverse direction. In a discriminator that feeds bills along their long dimension, the forward direction may be defined as the fed direction whereby the left edge of a bill is fed first and conversely for the reverse direction. In such a mode, when a stack of bills is processed by the discriminator, the forward/reverse orientation of the first bill in the stack is determined and subsequent bills are flagged if they do not have the same forward/reverse orientation. Alternatively, the discriminator may be designed to permit the operator to designate the forward/reverse orientation against which bills will be evaluated with those having a different forward/reverse orientation being flagged. Assuming the first bill in a stack determines the relevant forward/reverse orientation and assuming the first bill is fed in the forward direction, then provided all the bills in the stack are also fed in the forward direction, the display 63 will indicate the aggregate value of the bills in the stack and/or the number of bills of each denomination in the stack. However, if a bill having the opposite forward/reverse orientation is included in the stack, the discriminator will stop operating with the opposite forward/reverse oriented bill being the last bill deposited in the output receptacle. The opposite forward/reverse oriented bill then may be removed from the output receptacle. In automatic re-start embodiments, the removal of the opposite forward/reverse oriented bill causes the discriminator to continue operating. The removed bill may then be placed into the input receptacle with the proper face orientation. Alternatively, in non-automatic re-start embodiments, the opposite forward/reverse oriented bill may be either placed into the input receptacle with the proper forward/reverse orientation and the continuation key 65 depressed, or placed back into the output receptacle with the proper forward/reverse orientation. Depending on the set up of the discriminator when a bill is placed back into the output receptacle with the proper forward/reverse orientation, the denomination selection key associated with the opposite forward/reverse oriented bill may be selected, whereby the associated denomination counter and/or aggregate value counter are appropriately incremented and the discriminator resumes operation. Alternatively, in embodiments wherein the discriminator is capable of determining denomination regardless of forward/reverse orientation, the continuation key 65 or a the third key may be depressed whereby the discriminator resumes operation and the appropriate denomination counter and/or total value counter is incremented in accordance with the denomination identified by the discriminating unit. In single-direction discriminators, any reverse-oriented bills will be unidentified bills. In dual-direction discriminators, reverse-oriented bills may be properly identified by the discriminating unit.

In a multi-output receptacle discriminator, the orientation mode may be used to route all bills oriented in the forward direction to one output receptacle and all bills oriented in the reverse direction to another output receptacle. In single-direction discriminators, reverse-oriented bills may be routed to an inspection station such as 1690 of FIG. 2 for manual turnover by the operator and the unidentified reverse-oriented bills may then be passed by the discriminator again. In discriminators capable of identifying bills fed in both forward and reverse directions ("dual-direction discriminators"), identified reverse-oriented bills may be routed directly to an appropriate output receptacle. For example, in dual-direction discriminators bills may be sorted both by forward/reverse orientation and by denomination, e.g., forward $1 bills into pocket #1, reverse $1 bills into pocket #2, forward $5 bills into pocket #3, and so on or simply by denomination, regardless of forward/reverse orientation, e.g., all $1 bills into pocket #1 regardless of forward/reverse orientation, all $2 bills into pocket #2, etc.

### Suspect Mode

In addition to the above modes, a suspect mode may be activated in connection with these modes whereby one or more authentication tests may be performed on the bills in a stack. When a bill fails an authentication test, the discriminator will stop with the failing or suspect bill being the last bill transported to the output receptacle. The suspect bill then may be removed from the output receptacle and set aside.

Likewise, one or more of the above described modes may be activated at the same time. For example, the face mode and the forward/reverse orientation mode may be activated at the same time. In such a case, bills that are either reverse-faced or opposite forward/reverse oriented will be flagged.

When a bill is flagged, for example, by stopping the transport motor with the flagged bill being the last bill deposited in the output receptacle, the discriminating device indicates to the operator when the bill was flagged. This indication may be accomplished by, for example, lighting an appropriate light, generating an appropriate sound, and/or displaying an appropriate message in the display section 63 (FIG. 4). Such indication might include, for example, "no call", "stranger", "failed magnetic test", "failed UV test", "no security thread", etc.

## Claims

1. A currency discriminator that counts and discriminates bills comprising:
a discriminating unit by which bills are passed; the discriminating unit being adapted to flag unidentified bills; and
counters keeping track of the value of bills discriminated; and
an input receptacle for receiving a stack of bills; and
one or more output receptacles for receiving bills after being discriminated by said discriminating unit; and
a transport mechanism for transporting said bills one at a time, from said input receptacle past said discriminating unit and to said one or more output receptacles; and
an examining station;
wherein the discriminating unit is adapted to flag a bill having a predetermined characteristic by transferring the flagged bill to the examining station where it can be conveniently examined by an operator and then suspending the operation of the discriminator; and
denomination selection elements to enable the operator with the depression of a single button to indicate the denomination of an unidentified but acceptable bill, to cause the value of the bill to be reflected in any appropriate counters, to cause the discriminator to resume operation, and to cause the transport mechanism to transfer the unidentified but acceptable bill from the examining station to one of the one or more output receptacles; and
a continuation selection element to enable the operator to cause the discriminator to resume operation without adversely affecting any counters when an unidentified bill is determined to be unacceptable;
wherein said unidentified bill is transferred to the examining station before the discriminator halts;
wherein the examination station allows access to said unidentified bill such that the bill may be removed from the currency discriminator; and
wherein upon determination that a bill is acceptable, the bill is transferred to one of the one or more output receptacles.

2. The device of claim 1 wherein the denomination selection elements comprise denomination keys and the continuation selection element comprises a continuation key.

3. The device of claim 1 further comprising a reject receptacle for receiving bills which are determined to be unacceptable.

4. A method of discriminating and counting currency bills using a currency discriminator device comprising:
moving bills one at a time by means of a transport mechanism from an input receptacle past a discriminating unit and to one or more output receptacles; and
counting their value;
flagging an unidentified bill by transferring the flagged bill to a location where it can be conveniently examined by an operator and then suspending the operation of the discriminator;
wherein unidentified bills are transferred to an examining station before the discriminator halts, the examining station being the location where the unidentified bill can be conveniently examined by an operator;
the operator then examining the bill and determining whether the bill is acceptable or not and either:
(a) depressing an appropriate denomination selection element whereby the depression of a single button enables the operator to indicate the denomination of an unidentified but acceptable bill, to cause the value of the bill to be reflected in any appropriate counters, to cause the discriminator to resume operation, and to cause the transport mechanism to transfer the unidentified but acceptable bill from the examining station to one of the one or more output receptacles; or
(b) depressing a continuation selection element whereby the depression of the continuation selection element enables the operator to cause the discriminator to resume operation without adversely affecting any counters when an unidentified bill is determined to be unacceptable; and
wherein said unidentified bill which is determined to be unacceptable is removed from the examining station and from the currency discriminator; and
wherein upon determination that a bill is acceptable, the bill is transferred to one of the one or more output receptacles.

5. The method of claim 4 wherein the denomination selection elements comprise denomination keys and the continuation selection element comprises a continuation key.

## Patentansprüche

1. Währungsunterscheider, der Banknoten zählt und unterscheidet, umfassend:
Eine Unterscheidungseinheit, an der Banknoten vorbeigeführt werden; die Unterscheidungseinheit ist angepasst, um nicht erkannte Banknoten anzuzeigen; und
Zähler, die den Wert der unterschiedenen Banknoten verfolgen; einen Eingabebehälter zum Aufnehmen eines Banknotenstapels; und ein oder mehrere Ausgabebehälter zum Empfangen der Banknoten, nachdem diese durch die Unterscheidungseinheit unterschieden wurden; und
einen Transportmechanismus zum Transportieren der Banknoten eine nach der anderen von dem Eingabebehälter an der Unterscheidungseinheit vorbei und zu dem einen oder mehreren Ausgabebehälter(n); und
eine Untersuchungsstation;
wobei die Unterscheidungseinheit angepasst ist, eine Banknote anzuzeigen, die eine vorbestimmte Eigenschaft aufweist, durch Überführen der angezeigten Banknote zu der Untersuchungsstation, wo diese bequem von einem Bediener untersucht werden kann, und dann der Betrieb des Unterscheiders eingestellt wird;
Nennwertauswahlelemente, um dem Bediener zu ermöglichen, durch das Drücken eines einzigen Knopfes den Nennwert einer nicht erkannten, jedoch akzeptierbaren Banknote anzugeben, um den Wert der Banknote durch jeden zugehörigen Zähler wiederzugeben und den Unterscheider den Betrieb wieder aufnehmen zu lassen; und den Transportmechanismus zu veranlassen, die nicht erkannte, jedoch akzeptierbare Banknote von der Untersuchungsstation zu einem des/der einen oder mehreren Ausgabebehälter(n) zu transportieren; und ein Fortsetzungsauswahlelement, um dem Bediener zu ermöglichen, den Unterscheider seinen Betrieb wieder aufnehmen zu lassen, ohne nachteilig irgendeinen Zähler zu beeinflussen, wenn eine nicht erkannte Banknote als inakzeptabel bestimmt wird, wobei die nicht erkannte Banknote zu der Untersuchungsstation überführt wird bevor der Unterscheider anhält, wobei die Untersuchungsstation einen Zugriff auf die nicht erkannte Banknote ermöglicht, so dass die Banknote aus dem Währungsunterscheider entfernt werden kann; und wobei nach dem Bestimmen, dass eine Banknote akzeptierbar ist, die Banknote zu einem des/der einen oder mehreren Ausgabebehälter(n) überführt wird.

2. Die Vorrichtung gemäß Anspruch 1, worin die Nennwertauswahlelemente Nennwerttasten und das Fortsetzungsauswahlelement eine Fortsetzungstaste umfasst.

3. Die Vorrichtung gemäß Anspruch 1, die weiter einen Auswurfbehälter zum Empfangen von Banknoten umfasst, welche als inakzeptabel bestimmt worden sind.

4. Ein Verfahren zum Unterscheiden und Zählen von Banknoten, das eine Währungsunterscheidungsvorrichtung verwendet, umfassend:
Bewegen der Banknoten eine nach der anderen mittels eines Transportmechanismus von einem Eingabebehälter entlang einer Unterscheidungseinheit und zu einem oder mehreren Ausgabebehälter(n); und Zählen ihres Wertes; Anzeigen einer nicht erkannten Banknote durch Überführen der angezeigten Banknote zu einem Ort, wo diese bequem durch einen Bediener untersucht werden kann, und dann Abbrechen des Betriebs des Unterscheiders; wobei nicht erkannte Banknoten zu einer Untersuchungsstation überführt werden bevor der Unterscheider anhält, die Untersuchungsstation ist der Ort, wo die nicht erkannten Banknoten bequem von einem Bediener untersucht werden können; wobei der Bediener dann die Banknote untersucht und bestimmt, ob die Banknote akzeptierbar ist oder nicht und entweder:
(a) Drücken eines zugehörigen Nennwertauswahlelementes, wobei das Drücken eines einzigen Knopfes dem Bediener ermöglicht, den Nennwert einer nicht erkannten, jedoch akzeptierbaren Banknote anzuzeigen, um den Wert der Banknote in jedem zugehörigen Zähler wiedergeben zu lassen, den Unterscheider den Betrieb wieder aufnehmen zu lassen, und den Transportmechanismus dazu zu veranlassen, die nicht erkannte, jedoch akzeptierbare Banknote von der Untersuchungsstation zu einem des/der einen oder mehreren Ausgabebehälter(n) zu überführen; oder
(b) Drücken eines Fortsetzungsauswahlelements, wobei das Drücken des Fortsetzungsauswahlelements dem Bediener ermöglicht, den Unterscheider seinen Betrieb wieder aufnehmen zu lassen, ohne nachteilig irgendeinen Zähler zu beeinflussen, wenn eine nicht erkannte Banknote als inakzeptabel bestimmt worden ist, und
wobei die nicht erkannte Banknote, welche als inakzeptabel bestimmt worden ist, aus der Untersuchungsstation und von dem Währungsunterscheider entfernt wird; und wobei nach dem Bestimmen, dass eine Banknote akzeptierbar ist, die Banknote zu einem des/der einen oder mehreren Ausgabebehälter(n) überführt wird.

5. Das Verfahren gemäß Anspruch 4, worin die Nennwertauswahlelemente Nennwerttasten umfassen und das Fortsetzungsauswahlelement eine Fortsetzungstaste umfasst.

## Revendications

1. Dispositif de distinction d'unités monétaires qui compte et distingue des billets de banque comprenant :
une unité de distinction à travers laquelle des billets de banque sont acheminés ; l'unité de distinction étant adaptée pour baliser des billets de banque non identifiés ; et
des compteurs gardant la trace de la valeur de billets de banque distingués; et
un réceptacle d'entrée pour recevoir une pile de billets de banque ; et
un ou plusieurs réceptacles de sortie pour recevoir des billets de banque après qu'ils ont été distingués par ladite unité de distinction ; et
un mécanisme de transport pour transporter lesdits billets de banque un à la fois, depuis ledit réceptacle d'entrée au-delà de ladite unité de distinction et vers lesdits un ou plusieurs réceptacles de sortie ; et
une station d'inspection ;
dans lequel l'unité de distinction est adaptée pour baliser un billet de banque doté d'une caractéristique prédéterminée en transférant le billet de banque balisé jusqu'à la station d'inspection où il peut être commodément examiné par un opérateur et en suspendant ensuite le fonctionnement du dispositif de distinction ; et
des éléments de sélection de coupures pour permettre à l'opérateur, en appuyant sur un seul bouton, d'indiquer la coupure d'un billet de banque non identifié mais acceptable, pour amener la valeur du billet de banque à être reflétée dans tous compteurs appropriés, pour amener le dispositif de distinction à reprendre le fonctionnement, et pour amener le mécanisme de transport à transférer le billet de banque non identifié mais acceptable de la station d'inspection à l'un des un ou plusieurs réceptacles de sortie ; et
un élément de sélection de continuation pour permettre à l'opérateur d'amener le dispositif de distinction à reprendre le fonctionnement sans affecter de manière défavorable de quelconques compteurs lorsqu'un billet de banque non identifié est déterminé comme étant non acceptable ;
dans lequel ledit billet de banque non identifié est transféré à la station d'inspection avant que le dispositif de distinction ne s'interrompe ;
dans lequel la station d'inspection permet l'accès audit billet de banque non identifié de sorte que le billet de banque peut être enlevé du dispositif de distinction d'unités monétaires ; et
dans lequel lorsqu'un billet de banque est déterminé comme étant acceptable, le billet de banque est transféré vers un parmi les un ou plusieurs réceptacles de sortie.

2. Dispositif selon la revendication 1, dans lequel les éléments de sélection de coupure comprennent des touches de coupure et l'élément de sélection de continuation comprend une touche de continuation.

3. Dispositif selon la revendication 1, comprenant en outre un réceptacle de rejet destiné à recevoir des billets de banque qui sont déterminés comme étant non acceptables.

4. Procédé de distinction et comptage de billets de banque d'unités monétaires à l'aide d'un dispositif de distinction d'unités monétaires comprenant :
le déplacement des billets de banque un à la fois au moyen d'un mécanisme de transport depuis un réceptacle d'entrée au-delà d'une unité de distinction et vers un ou plusieurs réceptacles de sortie ; et
le comptage de leur valeur ;
le balisage d'un billet de banque non identifié en transférant le billet de banque balisé en direction d'un emplacement où il peut être commodément examiné par un opérateur puis en suspendant le fonctionnement du dispositif de distinction ;
dans lequel des billets de banque non identifiés sont transférés vers une station d'inspection avant que le dispositif de distinction ne s'interrompe, la station d'inspection étant l'emplacement où le billet de banque non identifié peut être commodément examiné par un opérateur ;
l'opérateur inspectant ensuite le billet de banque et déterminant si le billet de banque est acceptable ou non et soit :
(a) appuyant sur un élément de sélection de coupure approprié, moyennant quoi l'enfoncement d'un seul bouton permet à l'opérateur d'indiquer la coupure d'un billet de banque non identifié mais acceptable, pour amener la valeur du billet de banque à être reflétée dans tous compteurs appropriés, pour amener le dispositif de distinction à reprendre le fonctionnement, et pour amener le mécanisme de transport à transférer le billet de banque non identifié mais acceptable depuis la station d'inspection vers l'un parmi les un ou plusieurs réceptacles de sortie ; soit
(b) appuyant sur un élément de sélection de continuation moyennant quoi l'enfoncement de l'élément de sélection de continuation permet à l'opérateur d'amener le dispositif de distinction à reprendre le fonctionnement sans affecter de manière défavorable de quelconques compteurs lorsqu'un billet de banque non identifié est déterminé comme étant non acceptable ; et
dans lequel ledit billet de banque non identifié qui est déterminé comme étant non acceptable est enlevé de la station d'inspection et du dispositif de distinction d'unités monétaires ; et
dans lequel lorsqu'un billet de banque est déterminé comme étant acceptable, le billet de banque est transféré vers un parmi les un ou plusieurs réceptacles de sortie.

5. Procédé selon la revendication 4, dans lequel les éléments de sélection de coupure comprennent des touches de coupure et l'élément de sélection de continuation comprend une touche de continuation.
